# EUROPEAN PATENT APPLICATION

(11) **EP 4 617 620 A1**
(43) Date of publication of application: **17.09.2025**
(21) Application number: 24305394.9
(22) Date of filing: 15.03.2024
(51) Int. Cl.: G01B 11/28, G06T 7/62

(54) **DEVICES AND METHODS OF USE THEREOF FOR MEASUREMENT OF CONTACT SURFACE DIMENSIONS OF PRESTRAINED ELASTOMERIC PARTS**

(71) Applicant: Becton Dickinson France, 38800 Le Pont-de-Claix (FR)
(72) Inventor: GIL, Ludovic, 38000 Grenoble (FR); PERRIN, Eloïse, 38320 Eybens (FR); BRUN, Roland, 38760 Saint Paul de Varces (FR)
(74) Representative: Germain Maureau

(57) **Abstract**

A system for measuring contact surface dimensions, including a container defining a chamber therein; a thermal element coupled to the container and configured to adjust a temperature of the chamber; a medical device positioned in the chamber; a stopper positioned in the medical device such that at least a portion of the stopper defines a contact surface in contact with the medical device; a motor coupled to the medical device, the motor configured to move the medical device within the chamber; a camera positioned to capture a plurality of images of the contact surface; and a controller configured to: receive the plurality of images of the contact surface, and calculate a measurement of the contact surface from the plurality of images.

## Description

### FIELD OF THE INVENTION

The present disclosure relates generally to devices and methods of use thereof for measuring contact surface area of preconstrained elastomeric parts, including for example, stoppers for injection devices.

### BACKGROUND OF THE INVENTION

Prefilled injection devices are commonly-used containers to deliver drugs or vaccines to patients and include syringes, cartridges, and autoinjectors or the like. Such devices usually include a plunger attached to a stopper movably positioned within a container, such a syringe barrel, which is filled with a pharmaceutical composition in order to provide healthcare practitioners with a ready-to-use injection device for patients. Such injection devices may be exposed to various ambient temperatures when moved from a point of manufacturing, to storage, and/or to final use in a healthcare setting. For example, the devices may be manufactured and/or filled in a setting having one temperature range, stored in subzero temperatures, and subsequently shipped through multiple settings having variable ambient temperatures. Such changes in ambient temperature can cause a stopper to move relative to the syringe barrel or other portion of the device, which can compromise seal integrity and result in leaks and/or the introduction of contaminants into or around the stopper. In addition, due to the difference of the coefficient of thermal expansion (CTE) between the elastomeric stopper and the adjacent components, the surfaces of contact evolve as a function of temperature.

The present disclosure provides systems, devices, and methods of use thereof to measure, visualize, and/or otherwise analyze contact surface characteristics of an elastomeric component, such as a stopper, preconstrained in a container such as a syringe barrel, at various temperatures.

### SUMMARY OF THE INVENTION

The present disclosure provides a system for measuring a contact surface dimensions, including: a container defining a chamber therein; a thermal element coupled to the container and configured to adjust a temperature of the chamber; a medical device positioned in the chamber; a stopper positioned in the medical device such that at least a portion of the stopper defines a contact surface in contact with the device; a motor coupled to the medical device, the motor configured to move the medical device within the chamber; a camera positioned to capture a plurality of images of the contact surface; and a controller configured to: receive the plurality of images of the contact surface, and calculate a measurement of the contact surface dimensions from the plurality of images.

The controller may be configured to calculate a measurement of the contact surface dimensions from the plurality of images by detecting a contrast in color between a first portion of the plurality of images containing the contact surface and a second portion of the plurality of images not containing the contact surface. The controller may include two or more subparts, assemblies, and/or components to perform the various functions and features described herein. The motor may be configured to rotate the device around a longitudinal axis of the device. Each of the plurality of images of the contact surface may include the contact surface in a different rotational position. The controller may be configured to aggregate the plurality of images into a single image showing a complete circumference of the contact surface.

The system may include a temperature sensor positioned in the chamber. The controller may be in communication with the temperature sensor, and the controller may be configured to adjust an operation of the thermal element in response to a communication from the temperature sensor.

The system may include a device mount positioned in the chamber and coupled to the motor by a linkage. The device mount may include a housing and an insert at least partially positionable within the housing, and the insert may be releasably engageable with the medical device. The contact surface may include one or more ribs defined by the stopper. The medical device may include at least one of a syringe barrel, a vial, a cartridge, an ampulue or other similar structure, and may optionally be formed of at least one of glass, ceramic, polymer, or other suitable material.

A method of measuring a contact surface dimension is disclosed, including positioning a syringe barrel in a chamber, the syringe barrel containing a stopper positioned at least partially inside the syringe barrel such that at least a portion of the stopper defines a contact surface in contact with the syringe barrel; moving the syringe barrel within the chamber; capturing a first plurality of images of the contact surface while the syringe barrel is moving; adjusting a temperature within the chamber; capturing a second plurality of images of the contact surface while the syringe barrel is moving; calculating at least one first measurement of the contact surface from the first plurality of images; and calculating at least one second measurement of the contact surface from the second plurality of images.

Calculating at least one first measurement of the contact surface from the first plurality of images may include detecting a contrast in color between a first portion of the first plurality of images containing the contact surface and a second portion of the first plurality of images not containing the contact surface. The method may include calculating a difference between the at least one first measurement of the contact surface and the at least one second measurement of the contact surface. Moving the syringe barrel within the chamber may include rotating the syringe barrel around a longitudinal axis of the syringe barrel. Each of the first plurality of images of the contact surface may include the contact surface in a different rotational position.

The method may include aggregating the plurality of images into a single image showing a complete circumference of the contact surface. The method may include detecting a temperature of at least one of the stopper or the chamber. Adjusting a temperature within the chamber may be performed in response to detecting the temperature of at least one of the stopper or the chamber.

Each image of the first plurality of images may comprise a plurality of pixels, and the method may include calculating a dimension of at least one of the plurality of pixels based at least in part on a dimension of an object captured in the first plurality of images. The object may be the syringe barrel.

### BRIEF DESCRIPTION OF THE DRAWINGS

A more complete understanding of the present disclosure, and the attendant advantages and features thereof, will be more readily understood by reference to the following detailed description when considered in conjunction with the accompanying drawings, wherein:
FIG. 1 is a schematic diagram of a system according to non-limiting embodiments or aspects of the present disclosure;
FIG. 2 is a photograph of an example of a system according to non-limiting embodiments or aspects of the present disclosure;
FIG. 3A is a side view of an example of a device mount of a system according to non-limiting embodiments or aspects of the present disclosure;
FIG. 3B is a cross-sectional view of the device mount of FIG. 3A;
FIG. 4 is a flowchart of a method for operating a system according to non-limiting embodiments or aspects of the present disclosure;
FIG. 5 is an example of a plurality of images and aggregation thereof for a contact surface according to non-limiting embodiments or aspects of the present disclosure;
FIG. 6 is an example of calibrating a pixel dimension for an image according to non-limiting embodiments or aspects of the present disclosure;
FIG. 7 is an example of a graphical analysis and representative image generated by a system according to non-limiting embodiments or aspects of the present disclosure;
FIG. 8 is another example of a graphical analysis generated by a system and methods of use thereof according to non-limiting embodiments or aspects of the present disclosure; and
FIG. 9 is another example of a graphical analysis generated by a system and methods of use thereof according to non-limiting embodiments or aspects of the present disclosure.

### DETAILED DESCRIPTION OF THE INVENTION

The following description is provided to enable those skilled in the art to make and use the described aspects contemplated for carrying out the invention. Various modifications, equivalents, variations, and alternatives, however, will remain readily apparent to those skilled in the art. Any and all such modifications, variations, equivalents, and alternatives are intended to fall within the spirit and scope of the present invention.

As used herein, the singular form of "a", "an", and "the" include plural referents unless the context clearly dictates otherwise.

Spatial or directional terms, such as "left", "right", "inner", "outer", "above", "below", and the like, relate to the embodiments or aspects as shown in the drawing figures and are not to be considered as limiting as the embodiments or aspects can assume various alternative orientations.

All numbers used in the specification and claims are to be understood as being modified in all instances by the term "about". By "about" is meant within plus or minus twenty-five percent of the stated value. However, this should not be considered as limiting to any analysis of the values under the doctrine of equivalents.

Unless otherwise indicated, all ranges or ratios disclosed herein are to be understood to encompass the beginning and ending values and any and all subranges or subratios subsumed therein. For example, a stated range or ratio of "1 to 10" should be considered to include any and all subranges or subratios between (and inclusive of) the minimum value of 1 and the maximum value of 10; that is, all subranges or subratios beginning with a minimum value of 1 or more and ending with a maximum value of 10 or less. The ranges and/or ratios disclosed herein represent the average values over the specified range and/or ratio.

The terms "first", "second", and the like are not intended to refer to any particular order or chronology, but refer to different conditions, properties, or elements.

All documents referred to herein are "incorporated by reference" in their entirety.

The term "at least" is synonymous with "greater than or equal to."

As used herein, "at least one of" is synonymous with "one or more of." For example, the phrase "at least one of A, B, or C" means any one of A, B, or C, or any combination of any two or more of A, B, or C. For example, "at least one of A, B, and C" includes A alone; or B alone; or C alone; or A and B; or A and C; or B and C; or all of A, B, and C.

The word "comprising" and "comprises", and the like, does not exclude the presence of elements or steps other than those listed in any claim or the specification as a whole. In the present specification, "comprises" means "includes" and "comprising" means "including."

As used herein, the terms "parallel" or "substantially parallel" mean a relative angle as between two objects (if extended to theoretical intersection), such as elongated objects and including reference lines, that is from 0° to 5°, or from 0° to 3°, or from 0° to 2°, or from 0° to 1°, or from 0° to 0.5°, or from 0° to 0.25°, or from 0° to 0.1°, inclusive of the recited values.

As used herein, the terms "perpendicular", "transverse", "substantially perpendicular," or "substantially transverse" mean a relative angle as between two objects at their real or theoretical intersection is from 85° to 90°, or from 87° to 90°, or from 88° to 90°, or from 89° to 90°, or from 89.5° to 90°, or from 89.75° to 90°, or from 89.9° to 90°, inclusive of the recited values.

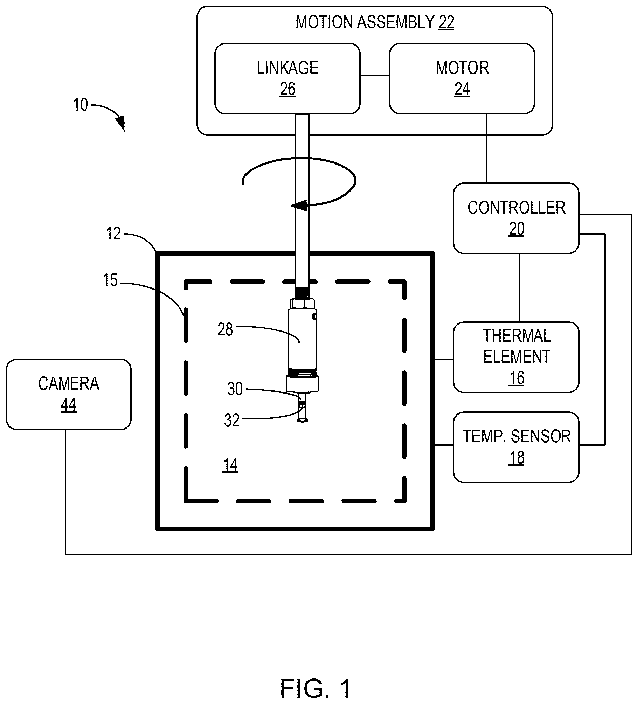

The present disclosure provides systems, devices, and methods of use thereof to measure, visualize, and/or otherwise analyze contact surface characteristics of an elastomeric component, such as a stopper, preconstrained in a container such as a syringe barrel, at various temperatures. Referring now to the figures in which like reference designations refer to like elements, an example of such a system 10 to measure, visualize, and/or otherwise analyze contact surface characteristics, and aspects and components of the system 10, are shown in FIGS. 1-3B.

The system 10 may generally include a container 12 defining a chamber 14 therein operable and/or configured to receive a device for testing and analysis, as described herein. The container 15 may define or include a window 15 providing visibility into the chamber 14 from an exterior of the container 12. The chamber 14 may be thermally-controlled or modified to provide a desired temperature therein. The system 10 may include one or more thermal elements 16 attached to, disposed within, and/or otherwise in thermal communication with the chamber 14 and operable to control, maintain, and/or adjust a thermal condition or temperature within the chamber 14. The one or more thermal elements 16 may include, for example, one or more convective, conductive, and/or radiative heating or cooling components or systems. The system 10 may include one or more temperature sensors 18 attached to, disposed within, and/or otherwise in thermal communication with the chamber 14 and/or contents thereof.

The system 10 may include a controller 20 configured or operable to adjust a temperature or thermal condition within the chamber 14. The controller 20 may be in communication with the one or more thermal elements 16 and/or the one or more temperature sensors 18 to facilitate setting, maintain, and/or adjusting a temperature or thermal condition within the chamber 14. In some non-limiting embodiments or aspects, controller 20 may include a stand-alone or dedicated control unit to provide the functions and features described herein. In some non-limiting embodiments or aspects, controller 20 may be implemented in hardware, firmware, or a combination of hardware and software. In some non-limiting embodiments or aspects, controller 20 may include one or more processors or computational components, one or more memory and/or data storage components, and/or components to receive, process, and output data, such as a processor, a display, a memory, an input device, a network interface, and/or the like. The controller 20 may include and/or constitute a computing device such as a desktop computer or other form of non-mobile computer, a cellular phone (e.g., a smartphone or standard cellular phone), a portable computer, a wearable device (e.g., watches, glasses, lenses, clothing, and/or the like), a personal digital assistant (PDA), and/or other like devices. In certain configurations, the controller 20 may include multiple sub-assemblies, such as a first sub-assembly responsible for controlling the testing procedure, and a second sub-assembly for performing post-processing.

The system 10 may include a motion assembly 22 operable to move, rotate, orient or otherwise position a device in the chamber 14 for testing and/or analysis. The motion assembly 22 may include one or more components coupled to and/or disposed within a portion of the container 12 and/or chamber 14 to provide the features disclosed herein. In some non-limiting embodiments or aspects, the motion assembly 22 may include a motor 24 coupled to a linkage 26, and a device mount 28 attached to the linkage 26. The motor 24 may be operable or configured to actuate at least a portion of the linkage 26 which, in turn, imparts movement to the device mount 28. In some non-limiting embodiments or aspects, the linkage 26 may include one or more gears or other mechanical interfaces to provide or translate motion in one or more axes of movement. The motion assembly 22 may include one or more sensors, encoders, or other components operable to convey information regarding the movement, speed, and/or position of one or more components of the motion assembly 22. The controller 20 may be operatively coupled to and/or in communication with one or more components of the motion assembly 22 to set, maintain, and/or adjust motion provided by the motion assembly 22.

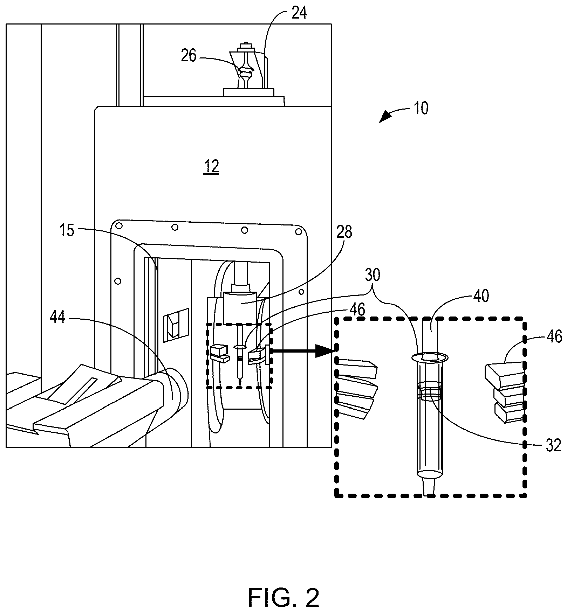

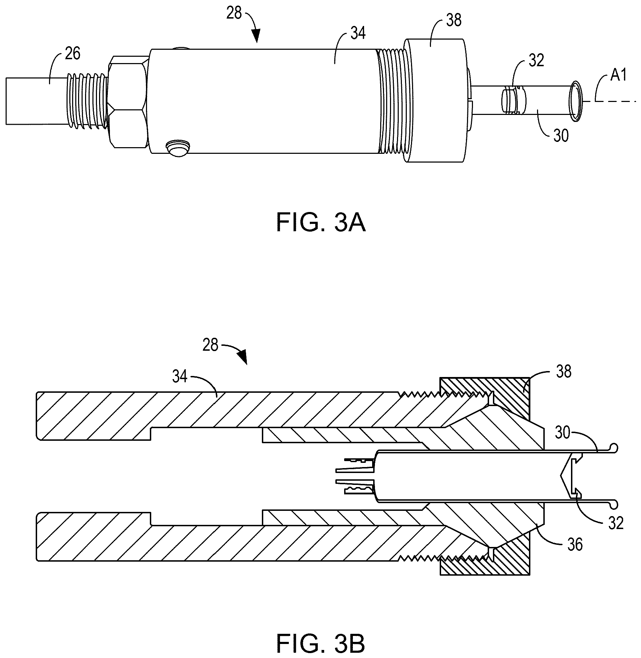

The device mount 28 may be configured and/or operable to releasably secure a medical device for testing and/or analysis within the chamber 14. The medical device may include, for example, a syringe barrel, vial, cartridge, ampulue, or other container, and may be constructed from a glass, ceramic, polymer, or other suitable material. For example, a syringe barrel 30 with a stopper 32 therein may be secured to a portion of the device mount 28 such that the stopper 32 is visible through the syringe barrel 30 and through the window 15 of the container 12. The device mount 28 may generally define or include a housing 34, an insert 36 at least partially positionable within the housing 34, and a cap 38 engageable with the housing 34 and/or insert 36. The insert 36 may receive at least a portion of the syringe barrel 30 therein (as shown in FIGS. 3A-3B), and the cap 38 may secure the insert 36 and the syringe barrel 30 to the housing 34. In an alternative configuration, the insert 36 may receive a portion of a plunger 40 attached to the stopper 32 (as shown in FIG. 2), where the syringe barrel 30 is not directly attached to or received by the insert 36 and/or device mount 28. Then insert 36 may be constructed from a pliable, cushioned, and/or elastomeric material with sufficient flexibility to grip or secure the syringe barrel 30 and/or plunger 40 without inadvertently damaging the syringe barrel 30 and/or plunger 40.

The device mount 28 may be coupled to the linkage 26 within the chamber 14 such that actuation of the motion assembly 22 imparts movement to the device mount 28, and thus to an attached syringe barrel 30 and/or stopper 32. The syringe barrel 30, the device mount 28, and/or one or more components of the linkage 26 may be coaxially aligned along a longitudinal axis A1.

The syringe barrel 30 may be constructed from one or more transparent materials to allow visibility of the stopper 32 therein. The stopper 32 may be constructed from one or more compressible materials or elastomers including but not limited to butyl rubber, styrene butadiene rubber, poly isoprene rubber, liquid silicone rubber, thermoplastic elastomer (TPE), and the like. The stopper 32 may include or define one or more ribs 42 extending radially outward around a perimeter of the stopper 32 that are sized, shaped, and/or positioned to form a seal with an interior of the syringe barrel 30.

The system 10 may include a camera 44 coupled to, extending from, or otherwise in proximity to the container 12 such that the camera 44 is operable to capture one or more images of a device within the chamber 14. For example, the camera 44 may be positioned outside of the chamber 14 and oriented to take pictures through the window 15 of the syringe barrel 30 and/or stopper 32 secured to the device mount 28 within the chamber 14. In an alternative configuration, the camera 44 may be positioned within the chamber 14. The camera 44 may have optical characteristics to capture images with sufficient resolution and magnification to enable and facilitate the methods and analysis disclosed herein.

The system 10 may include one or more lighting elements 46 coupled to, extending from, disposed within, and/or otherwise in proximity to the container 12 to illuminate the chamber 14 and the contents thereof. The one or more lighting elements 46 may be positioned and configured to provide sufficient lighting on or about a device coupled to the device mount 28, such as the syringe barrel 30 and/or stopper 32, to improve the quality, clarity, and/or other aspects of images captured by the camera 44.

In some non-limiting embodiments or aspects, one or more methods of use of the system 10 and the components thereof may include measuring a contact surface between multiple components of a device, such as the stopper 32 and syringe barrel 30, as a function of temperature. Multiple designs and configurations of stoppers and syringe barrels may be assessed in the disclosed manner to identify the characteristics most tolerant of or otherwise desirable across a prescribed temperature range.

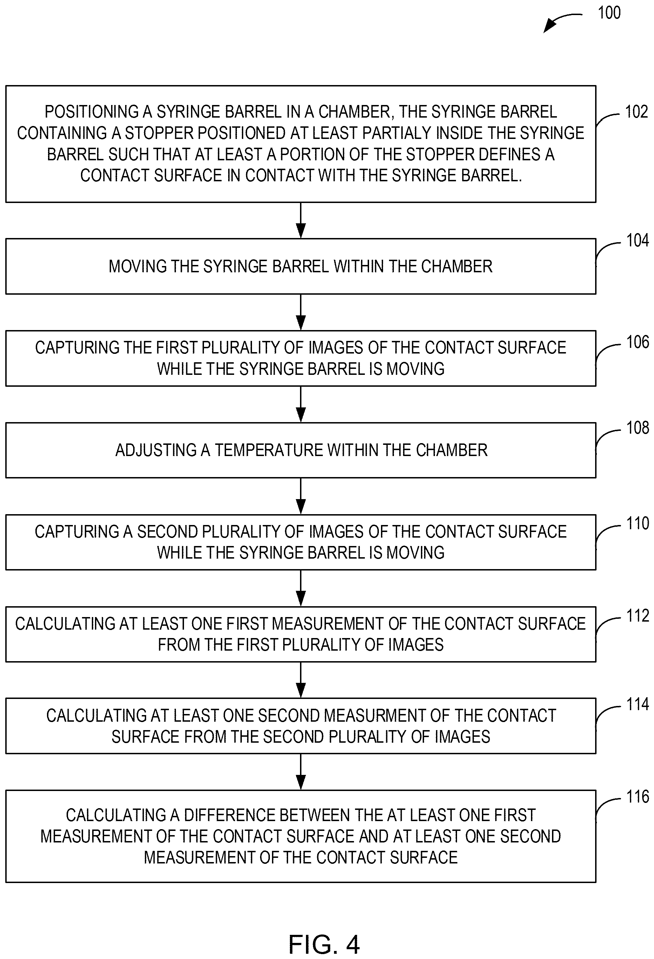

Referring now to FIG. 4, FIG. 4 is a flowchart of a non-limiting embodiment or aspect of a process 100 for measuring a contact surface between multiple components of a device, such as the stopper 32 and syringe barrel 30, as a function of temperature. The steps shown in FIG. 4 are for example purposes only. It will be appreciated that additional, fewer, different, and/or a different order of steps may be used in some non-limiting embodiments or aspects. In some non-limiting embodiments or aspects, one or more of the steps of process 100 may be performed (e.g., completely, partially, and/or the like) by the system 10. The system 10 may perform these processes based on controller 20 executing software instructions stored by a computer-readable medium, such as memory and/or storage component. A computer-readable medium (e.g., a non-transitory computer-readable medium) is defined herein as a non-transitory memory device. A memory device may include memory space located inside of a single physical storage device or memory space spread across multiple physical storage devices and/or as otherwise described herein. In some non-limiting embodiments or aspects, one or more of the steps of process 100 may be performed (e.g., completely, partially, and/or the like) by another system, another device, another group of systems, or another group of devices, separate from or including system 10. In some non-limiting embodiments or aspects, one or more of the steps of process 100 may be performed consecutively and/or concurrently.

As shown in FIG. 4, at step 102, the process 100 may include positioning a syringe barrel in a chamber, the syringe barrel containing a stopper positioned at least partially inside the syringe barrel such that at least a portion of the stopper defines a contact surface in contact with the syringe barrel. For example, the syringe barrel 30 and the stopper 32 may be secured to the device mount 28 within the chamber 14 of the container 12. The contact surface may constitute or be defined by the portion(s) of the stopper 32 (such as the ribs 42) that contact the interior surface of the syringe barrel 30.

As shown in FIG. 4, at step 104, the process 100 may include moving the syringe barrel within the chamber. For example, the motor 24 may be actuated or operated to impart motion to the linkage 26, which in turn imparts motion to the device mount 28 and the coupled syringe barrel 30 and stopper 32 therein. The movement of the syringe barrel 30 may include rotational movement about the longitudinal axis A1 of the syringe barrel 30. In one non-limiting aspect, the syringe barrel 30 and the stopper 32 may rotate in unison. In alternative examples, there may be respective movement between the syringe barrel 30 and the stopper 32.

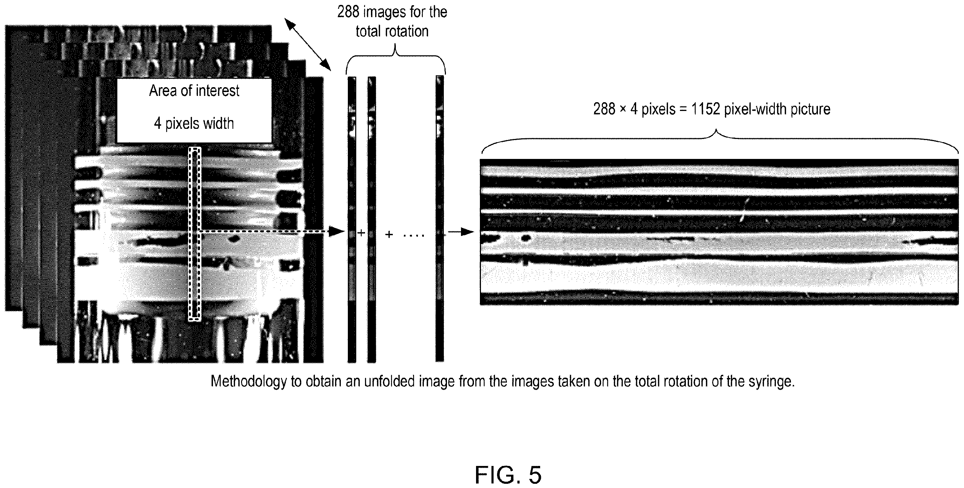

As shown in FIG. 4, at step 106, the process 100 may include capturing a first plurality of images of the contact surface while the syringe barrel is moving. For example, the camera 44 may be positioned to focus on and capture images of the contact surface between the stopper 32 and the syringe barrel 30 as the syringe barrel 30 is being rotated by the motor 24. In one example, each of the first plurality of images of the contact surface may include the contact surface in a different rotational position. The operation of the camera 4 and the motor 24 may be calibrated, synchronized, or otherwise controlled (e.g., by the controller 20 for example) to provide a desired quantity and frequency of captured images of the contact surface. The plurality of images may be captured with sufficient frequency and quantity to enable aggregation of the plurality of images into a single image showing a complete, continuous circumference of the contact surface, such as that shown in the example images in FIG. 5. The captured images may be communicated or otherwise transferred to the controller 20 for subsequent storage, processing, and/or analysis.

As shown in FIG. 4, at step 108, the process 100 may include adjusting a temperature within the chamber. For example, the thermal element 16 may be adjusted, actuated, or otherwise operated to raise or lower a temperature within the chamber 14 of the container 12. The temperature adjustment may be performed or facilitated at least in part by the controller 20 and/or temperature sensor 18. For example, adjusting the temperature within the chamber 14 may include detecting a temperature of at least one of the stopper 32, syringe barrel 30, and/or the chamber 14 with the temperature sensor 18, and adjusting operation of the thermal element 16 in response to the detected temperature. In one example, the adjustable temperature range for the chamber 14, stopper 32, and/or syringe barrel 30 of the system 10 may extend between 30°C and -80°C (or below) to ascertain contact surface performance ranging from deep freeze conditions to room temperature.

As shown in FIG. 4, at step 110, the process 100 may include capturing a second plurality of images of the contact surface while the syringe barrel is moving. For example, the camera 44 may be positioned to focus on and capture images of the contact surface between the stopper 32 and the syringe barrel 30 as the syringe barrel 30 is being rotated by the motor 24 while the chamber 14, stopper 32, and/or syringe barrel 30 is at a different temperature compared to the temperature when the first plurality of images was captured. In one example, each of the second plurality of images of the contact surface may include the contact surface in a different rotational position. The second plurality of captured images may be communicated or otherwise transferred to the controller 20 for subsequent storage, processing, and/or analysis.

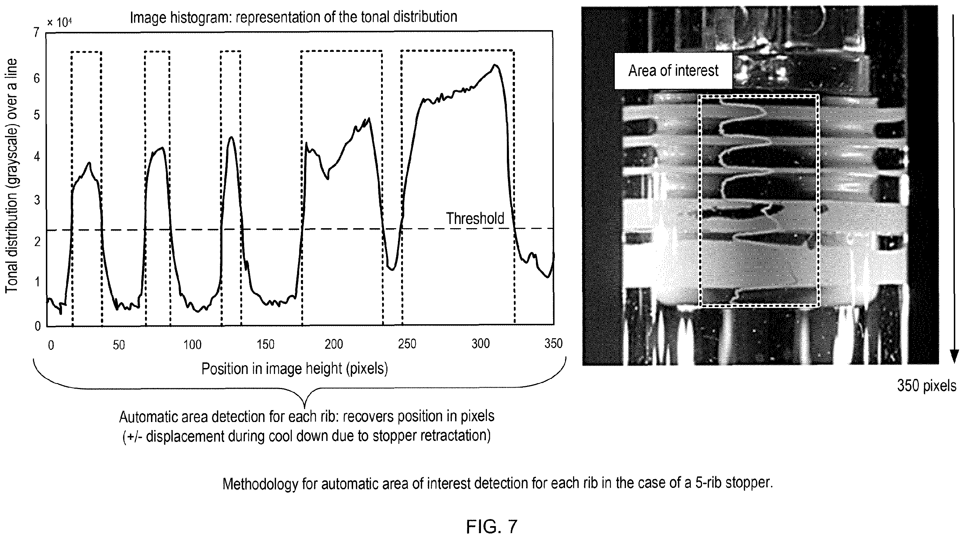

As shown in FIG. 4, at step 112, the process 100 may include calculating at least one first measurement of the contact surface from the first plurality of images. For example, calculating at least one first measurement of the contact surface from the first plurality of images may include detecting a contrast in color between a first portion of the first plurality of images containing the contact surface and a second portion of the first plurality of images not containing the contact surface. As a further example, in the sample photographic images shown in FIGS. 5 and 7, the portions of the ribs 42 of the stopper 32 forming the contact surface with the syringe barrel present a lighter-colored portion (e.g., white or light grey), while the regions of the syringe barrel not contacted by the stopper present a darker colored portion (e.g., black or dark grey). In one example, the measurement may include a quantification of lighter-colored pixels and/or contrasted darker-colored pixels of the captured images within a vertical and/or horizontal segment of each of the first plurality of images.

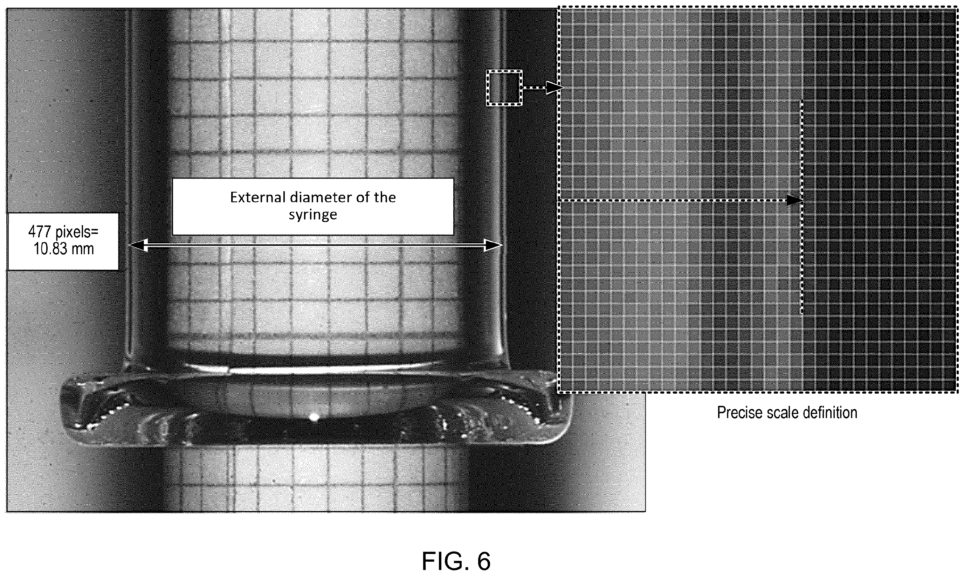

In another example, the measurement may include calculating an actual width, length, and or surface area by calculating a correlative width of each pixel of a captured image. The dimensions of each pixel of the captured images described herein may be calibrated by comparison to the actual dimension of an object captured in the plurality of images. For example, as shown in FIG. 6, an image of a portion of the syringe barrel 32 has a width of N pixels, and the actual width of a particular syringe barrel (or other calibrating item of known dimensions) may be *X* mm. Accordingly, 1 pixel has a width of approximately *XIN* mm. The representative, scaled pixel width can then be used to calculate actual surface areas and other dimensions of the contact surface in the pluralities of images.

As shown in FIG. 4, at step 114, the process 100 may include calculating at least one second measurement of the contact surface from the second plurality of images. The calculation may include the color-contrast and/or pixel width calibration examples described above.

As shown in FIG. 4, at step 116, the process 100 may include calculating a difference between the at least one first measurement of the contact surface and the at least one second measurement of the contact surface. For example, the dimensions and/or percentages of the contact surface versus portions of non-contact between the stopper 32 and syringe barrel 30 may be compared and./or calculated between the pluralities of images taken at different temperatures within the chamber 14.

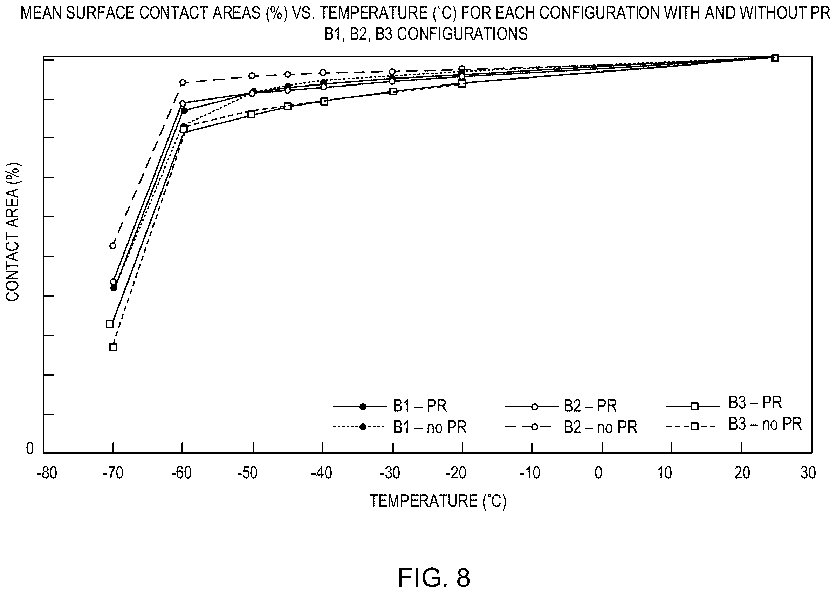

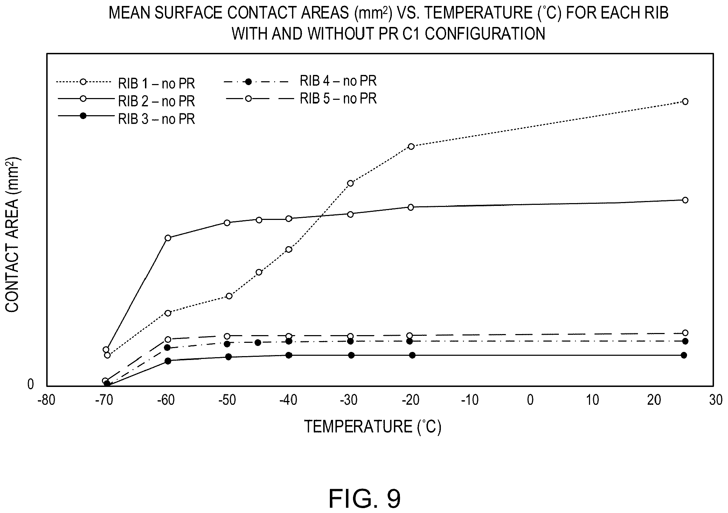

The collected images and calculated differences can thus provide a continuous, complete-circumference analysis of the contact surface between a stopper and a syringe barrel across a designated temperature range. Examples of the aggregation of the contact surface analysis and visualizations thereof employing the systems and methods disclosed herein are provided in FIGS. 7-9. For example, FIG. 7 includes an exemplary captured image of a contact surface for a multi-ribbed stopper, and the tonal distribution and position of color-contrasted pixels of the image that are representative and indicative of characteristics of the contact surface. FIG. 8 is an example of a chart displaying mean surface area percentage of contact surfaces for multiple stopper design variants as a function of temperature. FIG. 9 is an example of a chart displaying mean surface area (mm²) of contact surfaces for multiple stopper design variants as a function of temperature.

It will be appreciated by persons skilled in the art that the present disclosure is not limited to what has been particularly shown and described herein above. In addition, unless mention was made above to the contrary, it should be noted that all of the accompanying drawings are not to scale. Of note, the system components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein. Moreover, while certain embodiments or figures described herein may illustrate features not expressly indicated on other figures or embodiments, it is understood that the features and components of the examples disclosed herein are not necessarily exclusive of each other and may be included in a variety of different combinations or configurations without departing from the scope and spirit of the disclosure. A variety of modifications and variations are possible in light of the above teachings without departing from the scope and spirit of the disclosure, which is limited only by the following claims.

## Claims

1. A system for measuring a contact surface dimensions, comprising:
a container defining a chamber therein;
a thermal element coupled to the container and configured to adjust a temperature of the chamber;
a medical device positioned in the chamber;
a stopper positioned in the syringe barrel such that at least a portion of the stopper defines a contact surface in contact with the medical device;
a motor coupled to the medical device, the motor configured to move the medical device within the chamber;
a camera positioned to capture a plurality of images of the contact surface; and
a controller configured to:
receive the plurality of images of the contact surface, and
calculate a measurement of the contact surface from the plurality of images.

2. The system of claim 1, wherein the controller is configured to calculate a measurement of the contact surface from the plurality of images by detecting a contrast in color between a first portion of the plurality of images containing the contact surface and a second portion of the plurality of images not containing the contact surface.

3. The system of claim 1, wherein the motor is configured to rotate the medical device around a longitudinal axis of the medical device.

4. The system of claim 3, wherein each of the plurality of images of the contact surface includes the contact surface in a different rotational position.

5. The system of claim 4, wherein the controller is configured to aggregate the plurality of images into a single image showing a complete circumference of the contact surface.

6. The system of claim 1, further comprising a temperature sensor positioned in the chamber.

7. The system of claim 6, wherein the controller is in communication with the temperature sensor, and wherein the controller is configured to adjust an operation of the thermal element in response to a communication from the temperature sensor.

8. The system of claim 1, further comprising a device mount positioned in the chamber and coupled to the motor by a linkage, wherein the device mount comprises a housing and an insert at least partially positionable within the housing, and wherein the insert is releasably engageable with the medical device.

9. The system of claim 1, wherein the medical device includes at least one of a syringe barrel, a vial, a cartridge, or ampulue.

10. A method of measuring a contact surface dimension, comprising:
positioning a syringe barrel in a chamber, the syringe barrel containing a stopper positioned at least partially inside the syringe barrel such that at least a portion of the stopper defines a contact surface in contact with the syringe barrel;
moving the syringe barrel within the chamber;
capturing a first plurality of images of the contact surface while the syringe barrel is moving;
adjusting a temperature within the chamber;
capturing a second plurality of images of the contact surface while the syringe barrel is moving;
calculating at least one first measurement of the contact surface from the first plurality of images; and
calculating at least one second measurement of the contact surface from the second plurality of images.

11. The method of claim 10, wherein calculating at least one first measurement of the contact surface from the first plurality of images includes detecting a contrast in color between a first portion of the first plurality of images containing the contact surface and a second portion of the first plurality of images not containing the contact surface.

12. The method of claim 10, further comprising calculating a difference between the at least one first measurement of the contact surface and the at least one second measurement of the contact surface.

13. The method of claim 10, wherein moving the syringe barrel within the chamber includes rotating the syringe barrel around a longitudinal axis of the syringe barrel.

14. The method of claim 13, wherein each of the first plurality of images of the contact surface includes the contact surface in a different rotational position.

15. The method of claim 14, further comprising aggregating the plurality of images into a single image showing a complete circumference of the contact surface.

16. The method of claim 10, further comprising detecting a temperature of at least one of the stopper or the chamber.

17. The method of claim 16, wherein adjusting a temperature within the chamber is in response to detecting the temperature of at least one of the stopper or the chamber.

18. The method of claim 10, wherein each image of the first plurality of images comprises a plurality of pixels, the method further comprising calculating a dimension of at least one of the plurality of pixels based at least in part on a dimension of an object captured in the first plurality of images.

19. The method of claim 18, wherein the object is the syringe barrel, and wherein a plunger is coupled to the stopper.

20. The method of claim 10, wherein the contact surface includes one or more ribs defined by the stopper.
